# EUROPÄISCHE PATENTSCHRIFT

(11) **EP 0 393 440 B1**
(45) Veröffentlichungstag und Bekanntmachung des Hinweises auf die Patenterteilung: **23.06.1993**
(21) Anmeldenummer: 90106643.1
(22) Anmeldetag: 06.04.1990
(51) Int. Cl.: B60H 1/24, F24F 13/065

(54) **Belüftungsdüse**
Ventilation outlet
Buse d'aération

(30) Priorität: 17.04.1989 DE 3912518
(43) Veröffentlichungstag der Anmeldung: 24.10.1990
(73) Patentinhaber: Adam Opel Aktiengesellschaft, 65428 Rüsselsheim (DE)
(72) Erfinder: Zimmermann, Klaus, Ing. (grad.), D-6501 Lörzweiler (DE); Schwenk, Wolfgang, Dipl.-Ing. (FH), D-6257 Hünfelden 5 (DE)
(74) Vertreter: Bergerin, Ralf, Dipl.-Ing.

(56) Entgegenhaltungen:
- EP-A- 0 195 343
- FR-A- 2 401 038
- US-A- 4 377 107
- US-A- 4 665 804

## Beschreibung

Die Erfindung betrifft eine Belüftungsdüse für den Innenraum eines Kraftfahrzeuges, mit einem an einen Luftkanal sich anschließenden und insbesondere von der Armaturentafel des Kraftfahrzeuges aufgenommenen Gehäuse, in dem in Strömungsrichtung aufeinanderfolgende und im wesentlichen in senkrecht zueinander angeordneten Ebenen jeweils ein Satz von parallel zueinander angeordneten Lamellen angeordnet ist, wobei mindestens die Lamellen eines Satzes gemeinsam gleichsinnig schwenkbar sind.

Aus der deutschen Patentschrift 37 19 837 ist eine Belüftungsdüse der genannten Art bekannt, bei der beide Sätze von Lamellen in dem von der Armaturentafel des Kraftfahrzeuges aufgenommenen Gehäuse schwenkbar gelagert sind. Die Lagerung erfolgt dabei derart, daß jede Lamelle beidseitig mit einem Lagerzapfen versehen ist, der in entsprechende Ausnehmungen des Gehäuses eingreift. Die Lamellen jedes Satzes sind bewegungsschlüssig miteinander verbunden, mit einer in Strömungsrichtung luftaustrittsseitigen Lamelle ist ein Betätigungsgriff befestigt, der formschlüssig in ein Betätigungselement eingreift, das mit einer den luftaustrittsseitigen Lamellen vorgeschalteten Lamelle verbunden ist. Mittels des Betätigungsgriffes kann sowohl der luftaustrittsseitige Lamellensatz als auch über das Betätigungselement der diesem Lamellensatz vorgeschaltete Lamellensatz zum Zwecke der Einstellung der Strömungsrichtung verschwenkt werden.

Ein wesentlicher Nachteil der bekannten Belüftungsdüse ist darin zu sehen, daß sie aus einer Vielzahl von beweglichen und einzeln gelagerten Lamellen besteht, die zudem in aller Regel mittels einer Verbindungsstange zum jeweiligen Lamellensatz verbunden sind. Der Düsenkörper, der aus vielen Einzelteilen zusammengebaut werden muß, erfordert dementsprechend eine exakte Einhaltung von Bautoleranzen. Für eine einwandfreie Funktion der Düse ist es somit notwendig, schwierige, aufwendige und kostenintensive Werkzeugabstimmungen vorzunehmen. Die Vielzahl der Bauteile bedingt darüber hinaus die Gefahr von Quietsch- und Rasselgeräuschen beim Betrieb des Kraftfahrzeuges, ferner einen erhöhten Luftwiderstand infolge der geometrischen Vorgaben durch die einzeln gelagerten Lamellen, die zudem zu teilweise ungelenkten Luftströmungen bei maximal ausgelenkten Lamellen führen. Weiterhin ist bei der bekannten Belüftungsdüse aufgrund der vielen Einzelteile ein ungleichmäßiges Betätigungsgefühl, über den gesamten Betätigungsbereich betrachtet, zu verzeichnen, auch werden die stylistischen Möglichkeiten durch die Anordnung des Betätigungsgriffes bzw. des Betätigungselementes für die Lamellen eingeschränkt.

Aus der europäischen Patentschrift 0 195 343 ist ferner eine Belüftungsdüse der genannten Art bekannt, bei der der luftaustrittsseitige Lamellensatz in die Armaturentafel integriert ist und damit keine Verstellmöglichkeit der Lamellen dieses Lamellensatzes gegeben ist. Auf der der Armaturentafel abgewandten Seite des Gehäuses, somit dem Düseneintritt ist im Gehäuse ein Lagerelement für den in Strömungsrichtung gesehen vorgeschalteten Lamellensatz angeordnet, in dem der zu einer Baueinheit zusammengefaßte Lamellensatz schwenkbar gehalten ist. Verschwenkt wird die Baueinheit mittels eines Betätigungsknopfes, der eine Öffnung im nachgeschalteten, in die Armaturentafel integrierten Lamellensatz durchsetzt.

Die zuletzt genannte Belüftungsdüse weist zunächst den entscheidenden Nachteil auf, daß infolge des entgegen dem Luftstrom im hinteren Bereich des Gehäuses gelagerten Lamellensatzes bei jeder Richtungseinstellung ein nicht gerichteter ungewollter Luftstrom verbleibt, wobei dies unabhängig von der jeweiligen Richtungseinstellung des Lamellensatzes ist. Darüber hinaus ist der Ablenkwinkel des Luftstromes stark von der Form des Gehäuses abhängig und erfordert einen relativ großen Bauraum, der einer möglichst quadratischen Form angepaßt sein muß. Durch den notwendigerweise erforderlichen Bedienungsknopf im Abströmbereich der Belüftungsdüse wird der Luftwiderstand überdies stark erhöht. Der Aufbau des Lamellensatzes mit entsprechender Lagerung des Betätigungsknopfes erfordert mehrere Einzelteile und relativ komplexe Werkzeuge. Ist zum Beispiel aus stylistischen Gründen erwünscht, den Frontbereich der Belüftungsdüse stark zu überwölben, führt dies schließlich zu einer sehr starken Luftrichtungsänderung.

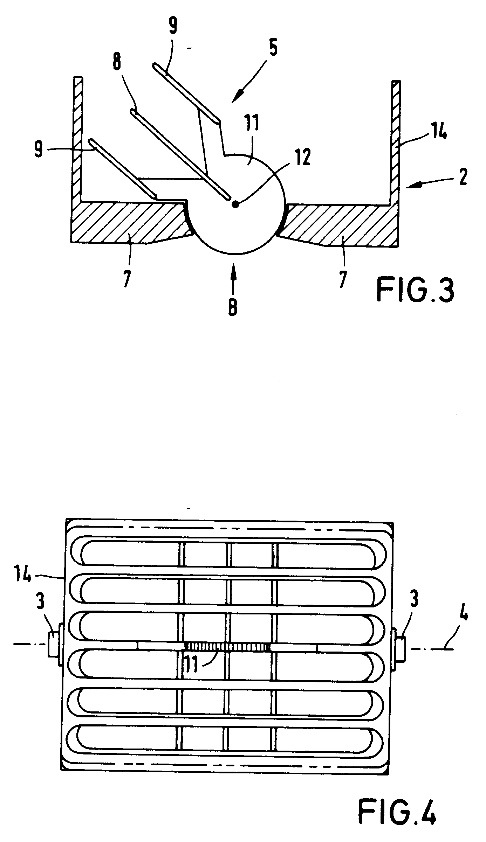

In der US-A-4 665 804 erfolgt die Lagerung der "fins" 25 nicht nahe des Bedienknopfes 33 in den "fins" 24, sondern im "main body" 23 weiter hinten von der Luftaustrittsseite abgewandt. Dadurch kann der Bedienknopf 33 zur Verstellung der "fins" 25 in einen weiten Bereich nicht starr und somit integral mit diesen verbunden sein. Gemäß Figur 3 ist der Hebelmechanismus des Bedienknopfes 33 im Zusammenspiel mit den "fins" 25 dargestellt.

Aufgabe der Erfindung ist es, eine Belüftungsdüse der genannten Art zu schaffen, die nur aus wenigen Bauteilen besteht und eine optimale Durchströmung des die Lamellen umfassenden Düsenkörpers in allen Düsenkörperstellungen gewährleistet.

Gelöst wird die Aufgabe bei einer Belüftungsdüse der genannten Art dadurch, daß die in Strömungsrichtung luftaustrittsseitigen Lamellen eine Baueinheit mit einem Dreheinsatz bilden, der im Gehäuse schwenkbar gelagert ist und die den luftaustrittsseitigen Lamellen vorgeschalteten Lamellen zu einer Baueinheit zusammengefaßt sind, die in dem die luftaustrittsseitigen Lamellen umfassenden Dreheinsatz schwenkbar gelagert sind.

Bei der erfindungsgemäßen Belüftungsdüse werden damit sämtliche Lamellen von zwei Baueinheiten aufgenommen, wobei die Lamellen der jeweiligen Baueinheit ein starrer Bestandteil dieser Baueinheit sind und die den nachgeordneten Lamellen zugeordnete Baueinheit im Dreheinsatz schwenkbar gelagert ist. Die Belüftungsdüse bedarf damit nur weniger Einzelteile, die in aller Regel als Formteile aus Kunststoff ausgebildet sind, es ergeben sich dadurch Kosteneinsparungen für Werkzeuge, Abstimmungen und Montage. Darüber hinaus ist aufgrund der erfindungsgemäßen Ausbildung der Belüftungsdüse eine Qualitätsverbesserung zu verzeichnen, da weniger Bauteile aufeinander abgestimmt werden müssen. Schließlich ist bei der erfindungsgemäßen Belüftungsdüse wegen der geringen Anzahl von Bauteilen eine Geräuschverbesserung gegenüber bekannten Belüftungsdüsen zu verzeichnen, ferner ein geringer Luftwiderstand aufgrund der verbesserten Gestaltung und Anordnungsmöglichkeit der einzelnen Lamellen, die ohne eine separate Lagerung für jede Lamelle auskommt. Überdies kann der Bauraum bei gleichbleibendem Nettoquerschnitt der Düse kleinergehalten werden.

Eine bevorzugte Ausführungsform der Erfindung sieht vor, daß die in Strömungsrichtung luftaustrittsseitigen Lamellen im wesentlichen waagerecht und die diesen vorgeschalteten Lamellem im wesentlichen senkrecht verlaufen, wobei die aus den vorgeschalteten Lamellen gebildete Baueinheit zweckmäßig aus einer Hauptlamelle und mindestens zwei an diesen angebundenen Hilfslamellen besteht. Die Hauptlamelle fungiert dabei als Leitlamelle, die angebundenen Hilfslamellen verhindern in den Extremstellungen der diesen Lamellen zugeordneten Baueinheit, daß ein ungewollter nicht gerichteter Luftstrom austreten kann.

Vorteilhaft ist die aus den vorgeschalteten Lamellen gebildete Baueinheit in einer oder mehreren der luftaustrittsseitigen Lamellen schwenkbar gelagert und weist darüber hinaus ein starr mit dieser verbundenes Betätigungselement für die Vorrichtung auf. Dieses kann beispielsweise als Kreisscheibe ausgebildet sein, die konzentrisch zur Lagerachse der durch die vorgeschalteten Lamellen gebildeten Baueinheit und in der Ebene einer der Lamellen der luftaustrittsseitigen Lamellen angeordnet ist und teilweise über die Luftaustrittsseite dieser Lamelle hinaussteht. Das Betätigungselement ist damit Bestandteil der durch die vorgeschalteten Lamellen gebildeten Baueinheit, wodurch sich die Möglichkeit ergibt, das Betätigungselement unter stylistischem Gesichtspunkt in die Gesamteinheit Belüftungsdüse zu integrieren. Im übrigen sollten die Lagerkräfte zwischen den beiden Baueinheiten so bemessen sein, daß ein Betätigungswert zum Verschwenken des vorgeschalteten Lamellensatzes über den durch den Luftstrom erzeugten Drehmoment liegt, um eine Selbstverstellung der den vorgeschalteten Lamellen zugeordneten Baueinheit zu vermeiden.

Abgesehen von der Lagerung der aus den vorgeschalteten Lamellen gebildeten Baueinheit in einer oder mehreren der luftaustrittsseitigen Lamellen kann eine Lagerung der Baueinheit auch unmittelbar im Dreheinsatz erfolgen. Hierbei sollte aber sichergestellt werden, daß der Lagerpunkt der den vorgeschalteten Lamellen zugeordneten Baueinheit möglichst weit in Richtung der Austrittsöffnung der Belüftungsdüse zu liegen kommt, um so zu gewährleisten, daß der Luftstrom gerichtet und weitgehend turbulenzfrei durch die Belüftungsdüse hindurchtreten kann.

Weitere Merkmale der Erfindung sind in der Beschreibung der Figuren dargestellt, wobei bemerkt wird, daß alle Einzelmerkmale und alle Kombinationen von Einzelmerkmalen erfindungswesentlich sind.

In den Figuren ist die Erfindung anhand eines Ausführungsbeispieles verdeutlicht, ohne auf dieses beschränkt zu sein. Es zeigt:
- Figur 1: einen senkrechten Mittelschnitt durch die erfindungsgemäße Belüftungsdüse,
- Figur 2: einen Schnitt durch die den luftaustrittsseitigen Lamellen und den vorgeschalteten Lamellen zugeordneten Baueinheiten gemäß der Linie A-A in Figur 1,
- Figur 3: einen Schnitt gemäß Figur 2 mit in eine maximal ausgelenkte Stellung gezeigten vorgeschalteten Lamellen und
- Figur 4: eine Ansicht B gemäß Figur 2 der beiden, die Lamellensätze aufnehmenden Baueinheiten.

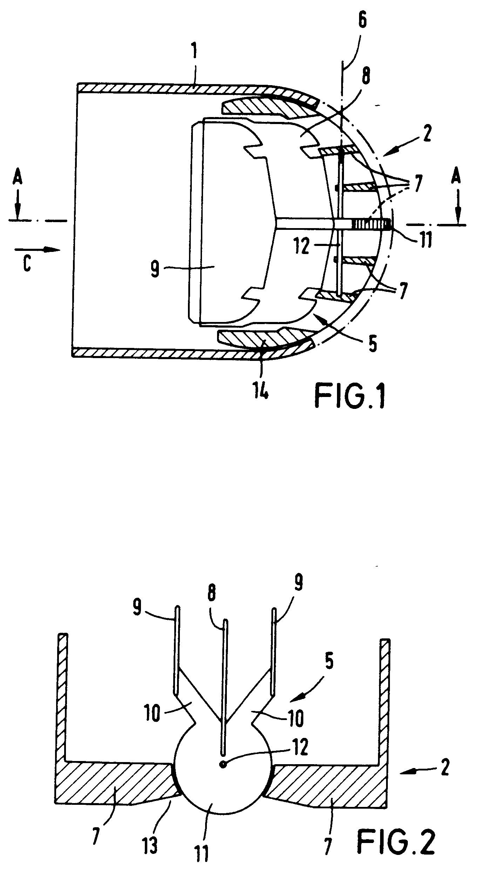

Die erfindungsgemäße Belüftungsdüse für den Innenraum eines Kraftfahrzeuges besteht im wesentlichen aus einem Gehäuse 1, einer ersten Baueinheit 2, die seitlich mit Lagerzapfen 3 versehen ist und um deren Mittelachse 4 im Gehäuse 1 schwenkbar ist, sowie einer zweiten Baueinheit 5, die um eine senkrechte Achse 6 in der ersten Baueinheit 2 schwenkbar gelagert ist. Das Gehäuse 1 wird dabei von einer nicht näher dargestellten Armaturentafel des Kraftfahrzeuges aufgenommen und schließt sich an einen gleichfalls nicht näher dargestellten Luftkanal an, durch den die Luft in Richtung des in Figur 1 gezeigten Pfeiles C in die Belüftungsdüse einströmt.

Die Baueinheit 2 ist durch einen die Lagerzapfen 3 aufnehmenden Dreheinsatz 14 und mehrere Lamellen 7 gebildet. Die weitere Baueinheit 5 besteht aus drei senkrecht orientierten Lamellen, mit einer mittleren Leitlamelle 8 und beidseitig zu dieser angeordneten und parallel hierzu verlaufenden Hilfslamellen 9. Die Lamellen 8 und 9 bilden mit einem diese verbindenden Steg 10 die zweite Baueinheit 5. Ein als Kreisscheibe ausgebildetes Betätigungselement 11 ist Bestandteil dieser Baueinheit 5 und in die feststehende, mittlere Lamelle 7 der ersten Baueinheit 2 integriert. Die Lagerung der zweiten Baueinheit 5 in der ersten Baueinheit 2 erfolgt über einen fest mit dem Betätigungselement 11 verbundenen und senkrecht zu diesem orientierten Lagerzapfen 12, der mit seinen beiden Enden in zugewandten Ausnehmungen einer oberen und unteren Lamelle 7 gehalten ist. Die mittlere Lamelle 7 weist auf ihrer Abströmseite eine Einbuchtung 13 auf, in die das Betätigungselement 11 teilweise hineinragt, so daß es unkompliziert manuell verstellt werden kann. Die Lagerung der zweiten Baueinheit 5 in der ersten Baueinheit 2 ist so bemessen, daß das Moment zum Verstellen der zweiten Baueinheit 5 über dem durch den Luftstrom auf diese Baueinheit einwirkenden Drehmoment liegt und hierdurch eine Selbstverstellung der zweiten Baueinheit 5 vermieden wird. Entsprechendes gilt für die Lagerkräfte betreffend die Lagerung der ersten Baueinheit 2 im Gehäuse 1.

Die Figur 1 verdeutlicht darüber hinaus die aus stylistischen Gründen vorgesehene, nach außen gewölbte Ausbildung der Belüftungsdüse; der durch das Gehäuse 1 vorgegebenen Kontur folgen auch die Lamellenkonturen der ersten und zweiten Baueinheiten.

### Bezugszeichenliste

- 1: Gehäuse
- 2: erste Baueinheit
- 3: Lagerzapfen
- 4: Achse
- 5: zweite Baueinheit
- 6: Achse
- 7: Lamelle
- 8: Leitlamelle
- 9: Hilfslamelle
- 10: Steg
- 11: Betätigungselement
- 12: Lagerzapfen
- 13: Einbuchtung
- 14: Dreheinsatz

## Patentansprüche

1. Belüftungsdüse für den Innenraum eines Kraftfahrzeuges, mit einem an einen Luftkanal sich anschließenden und insbesondere von der Armaturentafel des Kraftfahrzeuges aufgenommenen Gehäuse, in dem in Strömungsrichtung aufeinanderfolgende und im wesentlichen in senkrecht zueinander angeordneten Ebenen jeweils ein Satz von parallel zueinander angeordneten Lamellen angeordnet ist, wobei mindestens die Lamellen eines Satzes gemeinsam gleichsinnig schwenkbar sind und die in Strömungsrichtung luftaustrittsseitigen Lamellen (7) eine Baueinheit (2) mit einem Dreheinsatz (14) bilden, der im Gehäuse (1) schwenkbar gelagert ist, **dadurch gekennzeichnet,** daß die den luftaustrittsseitigen Lamellen (7) vorgeschalteten Lamellen (8, 9) zu einer Baueinheit (5) zusammengefaßt sind, die in einer oder mehreren der luftaustrittsseitigen Lamellen (7) schwenkbar gelagert ist.

2. Belüftungsdüse nach Anspruch 1, **dadurch gekennzeichnet,** daß ein Betätigungselement (11) für die Vorrichtung starr mit der durch die vorgeschalteten Lamellen (8, 9) gebildeten Baueinheit (5) verbunden ist.

3. Belüftungsdüse nach Anspruch 2, **dadurch gekennzeichnet,** daß das Betätigungselement als Kreisscheibe (11) ausgebildet ist, die konzentrisch zur Lagerachse (12) der durch die vorgeschalteten Lamellen (8, 9) gebildeten Baueinheit (5) und in der Ebene einer der Lamellen (7) der luftaustrittsseitigen Lamellen (7) angeordnet ist, sowie teilweise über die Luftaustrittsseite dieser Lamelle (7) hinaussteht.

## Claims

1. Ventilation nozzle for the interior of a motor vehicle, with an air duct connected to a housing, mounted especially on the dashboard of the motor vehicle, in which a set a lamellas extending parallel to each other is arranged successively in the flow direction essentially verically to each other, in which the lamellas of one set are pivotable together in one direction and the lamellas (7) in the flow direction on the air discharge side form one unit (2) with a rotary insert (14) which is pivotably mounted in the housing (1), **characterised** in that the lamellas (8, 9) in front of the lamellas (7) on the air discharge side are integrated into a unit (5) which is pivotably mounted in one or more of the lamellas (7) on the air discharge side.

2. Ventilation nozzle according to claim 1, **characterised** in that an operating element (11) for the device is rigidly connected to the unit (5) formed by the front lamellas (8, 9).

3. Ventilation nozzle according to claim 2, **characterised** in that the operating element is adapted to be a circular disc (11) which is concentrically arranged to the bearing axis (12) of the unit (5) formed by the front lamellas (8, 9) and in a plane of one of the lamellas (7) on the air discharge side, and which also partly projects over the air discharge side of this lamella (7).

## Revendications

1. Bouche d'aération pour l'habitacle d'un véhicule automobile, comportant un boîtier qui est connecté à un conduit d'air, est monté notamment dans la planche de bord du véhicule et à l'intérieur duquel des ensembles de lamelles parallèles sont disposés dans des plans situés l'un à la suite de l'autre dans la direction de l'écoulement et sensiblement perpendiculaires entre eux, les lamelles d'un jeu au moins pouvant pivoter simultanément dans la même direction et les lamelles (7) situées côté sortie, dans la direction d'écoulement, formant un ensemble de montage (2) avec un support (14) monté pivotant à l'intérieur du boîtier (1), caractérisé par le fait que les lamelles (8, 9) situées en amont des lamelles (7) côté sortie d'air sont groupées en une unité de montage (5) qui est montée pivotante dans une ou plusieurs des lamelles (7) situées côté sortie d'air.

2. Bouche d'aération selon la revendication 1, caractérisée par le fait qu'un élément d'actionnement (11) du dispositif est relié rigidement à l'unité de montage (5) constituée par les lamelles (8, 9) disposées en amont.

3. Bouche d'aération selon la revendication 2, caractérisée par le fait que l'élément d'actionnement est agencé sous forme de disque circulaire (11) qui est disposé concentriquement à l'axe d'articulation (12) de l'unité de montage (5) constituée par les lamelles (8, 9) amont et dans le plan de l'une des lamelles (7) situées côté sortie d'air et qui dépasse partiellement par rapport à la face sortie d'air desdites lamelles (7).
